# EUROPEAN PATENT APPLICATION

(11) **EP 2 937 724 A1**
(43) Date of publication of application: **28.10.2015**
(21) Application number: 13866021.2
(22) Date of filing: 13.12.2013
(51) Int. Cl.: G02B 7/02, G02B 1/04, G02B 3/00

(54) **CEMENTED LENS AND LENS UNIT**

(30) Priority: 19.12.2012 JP 2012276913
(71) Applicant: Nidec Sankyo Corporation, Suwa-gun, Nagano 393-8511 (JP)
(72) Inventor: HASHIMOTO, Yoshiyuki, Suwa-gun Nagano 393-8511 (JP); HORIUCHI, Kohei, Suwa-gun Nagano 393-8511 (JP)
(74) Representative: Becker Kurig Straus
(86) International application number: PCT/JP2013/083440
(87) International publication number: WO 2014/097980

(57) **Abstract**

The purpose of the present invention is to provide a cemented lens and a lens unit equipped with the cemented lens capable of preventing an air bubble from entering between lenses, the creation of gaps, or separation and eccentricity between lenses, and the leakage of adhesive to outside the lens. A projection (253) projecting toward the outer peripheral region (241) of a first lens and coming in contact with the outer peripheral region (241) is formed at the outer peripheral region (251) of a second lens in a cemented lens (10), and thus allows highly accurate control of the distance between the lens surface (240) of a first lens (24) and the lens surface (250) of a second lens (25). An annular recess (243) formed in the outer peripheral region (241) of the first lens extends circumferentially to surround the lens surface (240), and thus surplus adhesive (40) collects in the recess (243).

## Description

### [Technical Field]

The present invention relates to a cemented lens obtained by cementing plastic lenses and relates to a lens unit comprising the cemented lens.

### [Background Art]

High resolution has been recently required in a lens for a monitoring use and an on-vehicle use and a lens used for a projector and the like. In order to obtain high resolution in such a lens, magnification chromatic aberration is required to correct and thus a cemented lens obtained by cementing with an adhesive is used. In the cemented lens, an adhesive having a sufficient thickness is required for preventing a gap space and separation between lenses.

On the other hand, in a cemented lens, a structure has been proposed in which a protruded part is formed on one of lenses and the protruded part is abutted with the other lens to control a distance between the lenses (see Patent Literature 1).

### [Citation List]

### [Patent Literature]

[Patent Literature 1] Japanese Patent Laid-Open No. 2009-63877

### [Summary of the Invention]

### [Technical Problem]

In a cemented lens, when lenses are to be cemented together, a sufficient adhesive is required to apply so as not to generate a bubble within the adhesive. However, in the structure described in Patent Literature 1, an adhesive is leaked out to an outer peripheral side and thus, when the cemented lens is disposed within a lens holder, the cemented lens may be inclined due to the adhesive having been leaked out to the outer side.

In view of the problem described above, an objective of the present invention is to provide a cemented lens which is capable of preventing a bubble from being mixed to a space between lenses, occurrence of a gap space and separation between the lenses, an eccentricity between the lenses and, in addition, preventing leakage of an adhesive to the outside of the lens. Further, an objective of the present invention is to provide a lens unit comprising the cemented lens.

### [Solution to Problem]

To achieve the above mentioned objective, the present invention provides a cemented lens including a first lens having a concave surface, a second lens having a convex surface, an adhesive with which the concave surface of the first lens and the convex surface of the second lens are cemented. The first lens and the second lens are plastic lenses, the first lens is provided with a first lens side outer peripheral region on an outer peripheral side of a face cemented with the second lens so as to surround a lens face in a concave shape, and the second lens is provided with a second lens side outer peripheral region on an outer peripheral side of a face cemented with the first lens so as to surround a lens face in a convex shape. An outer peripheral region on one side of the first lens side outer peripheral region and the second lens side outer peripheral region is formed with a protruded part which is protruded toward an outer peripheral region on the other side and is abutted with the outer peripheral region on the other side, and the first lens side outer peripheral region is formed with a recessed part which is extended in a circumferential direction so as to surround the lens face of the first lens.

In the cemented lens in accordance with the present invention, an outer peripheral region on one side of the first lens side outer peripheral region and the second lens side outer peripheral region is formed with a protruded part which is protruded toward an outer peripheral region on the other side and is abutted with the outer peripheral region on the other side. Therefore, a distance between the lens face of the first lens and the lens face of the second lens can be controlled with a high degree of accuracy. Accordingly, thickness of the adhesive between the lens face of the first lens and the lens face of the second lens can be made thin and thus eccentricity between the lenses is hard to be occurred. Further, the thickness of the adhesive between the lens face of the first lens and the lens face of the second lens does not become too thin and thus a gap space and separation between the lenses are hard to be occurred. Further, the first lens side outer peripheral region is formed with a recessed part which is extended in a circumferential direction so as to surround the lens face and thus, even when a sufficient adhesive is applied so that a bubble is not formed, an excessive adhesive is retained in the recessed part when the second lens is put on the first lens. Therefore, the adhesive does not leak to the outside of the lens.

In the present invention, it is preferable that the protruded part is abutted with a portion of the outer peripheral region on the other side on an outer side in a radial direction with respect to the recessed part. According to this structure, the adhesive is not existed between the protruded part and the outer peripheral region on the other side and thus a distance between the lens face of the first lens and the lens face of the second lens (thickness of the adhesive between the lens face of the first lens and the lens face of the second lens) can be controlled by the protruded part with a high degree of accuracy.

In the present invention, it may be structured that the protruded part is protruded from the second lens side outer peripheral region and is abutted with the first lens side outer peripheral region. According to this structure, the protruded part is not covered with the adhesive when the adhesive is applied to the first lens and thus a distance between the lens face of the first lens and the lens face of the second lens (thickness of the adhesive between the lens face of the first lens and the lens face of the second lens) can be controlled by the protruded part with a high degree of accuracy.

In the present invention, it is preferable that the recessed part is formed in a ring shape which is connected in a circumferential direction. According to this structure, leakage of the adhesive to an outer side of the lens can be prevented over the entire periphery in the circumferential direction.

In the present invention, it is preferable that the protruded part is formed at a plurality of positions separated from each other in the circumferential direction. According to this structure, in comparison with a case that the protruded part is formed over the entire region in the circumferential direction, or that the protruded part is formed at only one position in the circumferential direction, the distance between the lens face of the first lens and the lens face of the second lens (thickness of the adhesive between the lens face of the first lens and the lens face of the second lens) can be controlled with a high degree of accuracy. In other words, when the protruded part is formed over the entire region in the circumferential direction, a high accuracy is required over the entire region in the circumferential direction. However, in a case that the protruded part is formed at a plurality of positions separated from each other in a circumferential direction, only portions in the circumferential direction (portions where the protruded parts are formed) are required to be formed with a high degree of accuracy. Further, when the protruded part is formed at one position in the circumferential direction, the first lens and the second lens may be cemented in an inclined state. However, when the protruded part is formed at a plurality of positions separated from each other in the circumferential direction, the inclination is hard to be occurred.

In the present invention, it is preferable that thickness of a portion of the adhesive located between the lens face of the first lens and the lens face of the second lens is set from 3µm to 20µm. In a case that the thickness of a portion located between the lens faces is not more than 3µm, a gap space and separation between the lenses may occur and, on the other hand, in a case that the thickness of the portion located between the lens faces exceeds 20µm, eccentricity may be easily occurred between the first lens and the second lens. Therefore, it is preferable that the thickness of the adhesive of a portion located between the lens faces is set 3µm through 20µm.

In the present invention, it is preferable that at least one of a difference between a refractive index of the adhesive and a refractive index of lens material structuring the first lens and a difference between the refractive index of the adhesive and a refractive index of lens material structuring the second lens is set to be not more than 0.05. According to this structure, a difference between the refractive index of the adhesive and the refractive index of the lens material is hard to affect the optical characteristics.

In the present invention, it is preferable that the adhesive has elasticity. According to this structure, even when a thermal expansion coefficient of lens material of the first lens and a thermal expansion coefficient of lens material of the second lens are different from each other, separation is hard to be occurred when the ambient temperature is varied.

In the present invention, it is preferable that the first lens side outer peripheral region is formed with an outer peripheral side recessed part on an outer side in a radial direction with respect to the recessed part. According to this structure, leakage of the adhesive to the outer side of the lens can be further prevented by the outer peripheral side recessed part.

In a lens unit having a lens holder which holds the cemented lens in accordance with the present invention, it is preferable that the lens holder is set in a contact state with only one lens of the first lens and the second lens and in a non-contact state with the other lens. According to this structure, even when expansion and shrinkage are occurred in the lens holder and the lenses with variation of the ambient temperature, a problem such as separation in the cemented lens is hard to be occurred.

In the present invention, it is preferable that the lens holder is contacted with a face of the one lens which is cemented with the other lens or a face on an opposite side of the one lens which is cemented with the other lens, and a gap space is provided between an inner peripheral face of the lens holder and an outer peripheral face of the one lens. According to this structure, even when expansion and shrinkage are occurred in the lens holder and the lenses with variation of the ambient temperature, a problem such as separation in the cemented lens is hard to be occurred.

In the present invention, it is preferable that an outside dimension of the first lens is larger than an outside dimension of the second lens, and the lens holder is in a contact state with only the first lens and is in a non-contact state with the second lens. According to this structure, a structure that one of the first lens and the second lens and the lens holder are set in a contact state may be easily realized.

### [Effects of the Invention]

In the cemented lens in accordance with the present invention, an outer peripheral region on one side of the first lens side outer peripheral region and the second lens side outer peripheral region is formed with a protruded part which is protruded toward an outer peripheral region on the other side and is abutted with the outer peripheral region on the other side. Therefore, a distance between the lens face of the first lens and the lens face of the second lens can be controlled with a high degree of accuracy. Accordingly, thickness of the adhesive between the lens face of the first lens and the lens face of the second lens can be made thin and thus eccentricity between the lenses is hard to be occurred. Further, the thickness of the adhesive between the lens face of the first lens and the lens face of the second lens does not become too thin and thus a gap space and separation between the lenses are hard to be occurred. Further, the first lens side outer peripheral region is formed with the recessed part which is extended in a circumferential direction so as to surround the lens face and thus, even when a sufficient adhesive is applied so that a bubble is not formed, an excessive adhesive is retained in the recessed part when the second lens is put on the first lens. Therefore, the adhesive does not leak to the outside of the lens. As a result, according to the present invention, mixture of a bubble in a space between lenses, occurrence of a gap space and separation between lenses, an eccentricity between lenses can be prevented and, in addition, leakage of the adhesive to the outside of the lens can be prevented.

### [Brief Description of Drawings]

Fig. 1 is an explanatory view showing a lens unit to which the present invention is applied.
Figs. 2(a), 2(b) and 2(c) are explanatory views showing a cemented lens to which the present invention is applied.
Fig. 3 is an enlarged explanatory view showing a part of a cemented lens to which the present invention is applied.
Fig. 4 is a graph showing a relationship between a distance between lens faces and a transmission eccentricity variation in a cemented lens to which the present invention is applied.
Fig. 5 is a graph showing a relationship between a spatial frequency and an MTF (Modulation Transfer Function) of a cemented lens to which the present invention is applied.

### [Reference Signs List]

- 1: lens unit
- 10: cemented lens
- 24: first lens
- 25: second lens
- 30: lens holder
- 40: adhesive
- 240: lens face
- 241: first lens side outer peripheral region
- 243: recessed part
- 246: second region (outer peripheral side recessed part)
- 250: lens face
- 251: second lens side outer peripheral region
- 253: protruded part

### [Description of Embodiments]

A cemented lens and an optical unit to which the present invention is applied will be described below with reference to the accompanying drawings. In the following description of a lens, when at least one side of an object side and an image side is an aspheric surface, the lens is referred to as an "aspherical lens" regardless of the other side is a spherical surface or an aspheric surface.

### (Structure of Lens Unit)

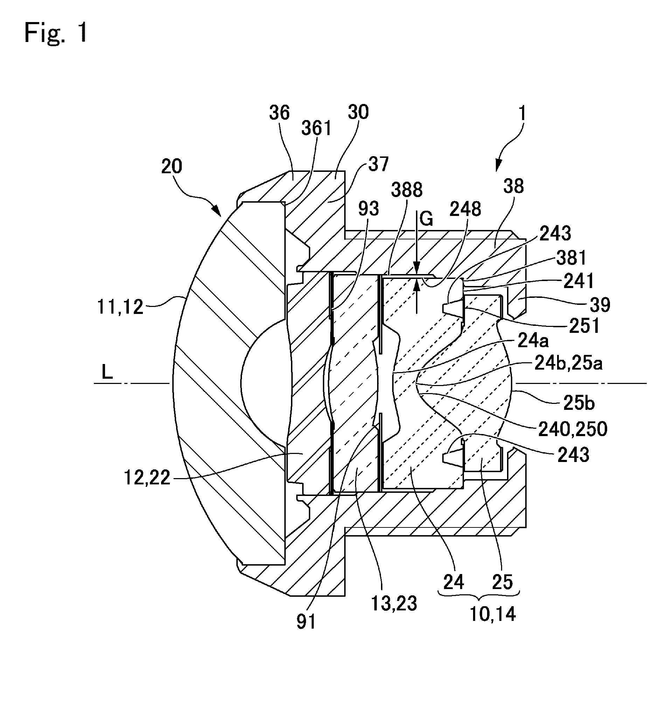

Fig. 1 is an explanatory view showing a lens unit to which the present invention is applied. As shown in Fig. 1, a lens unit 1 in this embodiment includes an image pickup lens 20 and a lens holder 30 which is made of resin and holds the image pickup lens 20 on its inner side. In this embodiment, the image pickup lens 20 is constituted as a wide-angle lens whose viewing angle is 150°-190°.

The image pickup lens 20 is comprised of four groups. More specifically, the image pickup lens 20 is comprised of, in order from an object side (object to be photographed side / front side), a first group 11 having negative power, a second group 12 having negative power, a third group 13 having positive power, and a fourth group 14 having positive power. A diaphragm 91 is provided between the third group 13 and the fourth group 14. A light shielding sheet 93 is disposed between the second group 12 and the third group 13. An infrared filter (not shown) and an imaging element (not shown) are disposed on a rear side (image side / opposite side to object side) with respect to the fourth group 14.

The image pickup lens 20 has totaled 5 pieces of lens and is constituted of four groups of five lenses. More specifically, the first group 11 is constituted of a single lens 21 having negative power, and the single lens 21 is a plastic lens or a glass lens. The second group 12 is constituted of a plastic lens having negative power. The third group 13 is constituted of a plastic lens 23 having positive power.

The fourth group 14 is constituted of a cemented lens 10 composed of a first lens 24 having negative power and a second lens 25 having positive power. In this embodiment, both of the first lens 24 and the second lens 25 are formed of a plastic lens and refractive indexes of lens material of the first lens 24 and the second lens 25 are different from each other.

In the image pickup lens 20, an object side face of the single lens 21 (first group 11) is a spherical surface having a convex shape and its image side face is a spherical surface or an aspheric surface having a concave shape. An object side face of the plastic lens 22 (second group 12) is an aspheric surface having a concave shape and its image side face is an aspheric surface having a convex shape. An object side face of the plastic lens 23 is an aspheric surface having a convex shape and its image side is an aspheric surface having a convex shape.

In the first lens 24 of the cemented lens 10 (fourth group 14), an object side face 24a is provided with a lens face formed of an aspheric surface having a convex shape, and an image side face 24b is provided with a lens face 240 formed of an aspheric surface having a concave shape. In the second lens 25, an object side face 25a is provided with a lens face 250 formed of an aspheric surface having a convex shape, and an image side face 25b is provided with a lens face formed of an aspheric surface having a convex shape. Therefore, the fourth group 14 is a cemented lens obtained by cementing the aspheric surface (lens face 240) on the image side of the first lens 24 and the aspheric surface (lens face 250) on the object side of the second lens 25 together.

### (Structure of Lens Holder 30)

The lens holder 30 is made of resin and is, in an optical axis "L" direction, provided with a bottom plate part 39 located on the most rear side, a tube-shaped body part 38 extended to a front side (object side) from an outer circumferential edge of the bottom plate part 39, a ring-shaped flange part 37 enlarged to an outer side in a radial direction from a front end of the tube-shaped body part 38, and a tube part 36 having a larger diameter than the tube-shaped body part 38 and extended to a front side (object side) from an outer circumferential edge of the flange part 37. An infrared filter (not shown) is held by a rear end face of the bottom plate part 39 of the lens holder 30.

A rear side portion of an inner peripheral face of the tube-shaped body part 38 of the lens holder 30 is formed with a step part 381 by which an outer peripheral end part of the fourth group 14 is positioned. The diaphragm 91, the third group 13 (plastic lens 23), the light shielding sheet 93 and the second group (plastic lens 22) are superposed on each other in this order on a front side of the fourth group 14 positioned by the step part 381. The first group 11 (single lens 21) is disposed on an inner side of the tube part 36 of the lens holder 30 and the single lens 21 is positioned by a step part 361 formed on an outer peripheral side of the flange part 37.

The lens holder 30 is contacted with only one lens of the first lens 24 and the second lens 25 of the cemented lens 10 and the lens holder 30 is not contacted with the other lens. In this embodiment, an outside dimension of the first lens 24 is larger than an outside dimension of the second lens 25 and thus the tube-shaped body part 38 of the lens holder 30 is contacted with only the first lens 24 and is not contacted with the second lens 25. More specifically, the step part 381 of the tube-shaped body part 38 is contacted with a face 24b of the first lens 24 which is cemented to the second lens 25 and a gap space "G" is provided between an inner peripheral face 388 of the tube-shaped body part 38 and an outer peripheral face 248 of the first lens 24. In this embodiment, the gap space "G" between the inner peripheral face 388 of the tube-shaped body part 38 and the outer peripheral face 248 of the first lens 24 is provided over a portion corresponding to about 2/3 in a thickness direction of the outer peripheral face 248 of the first lens 24.

### (Detailed Constitution of Cemented Lens 10)

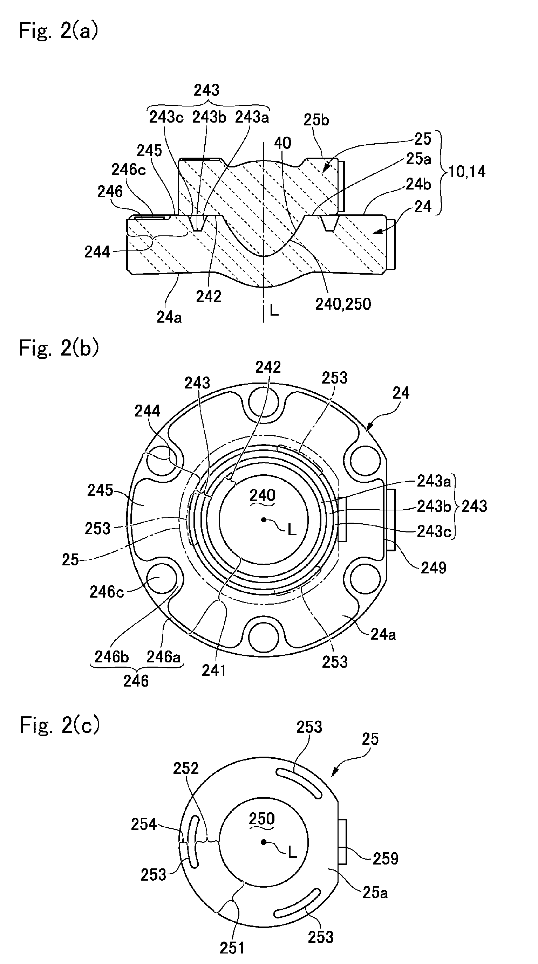

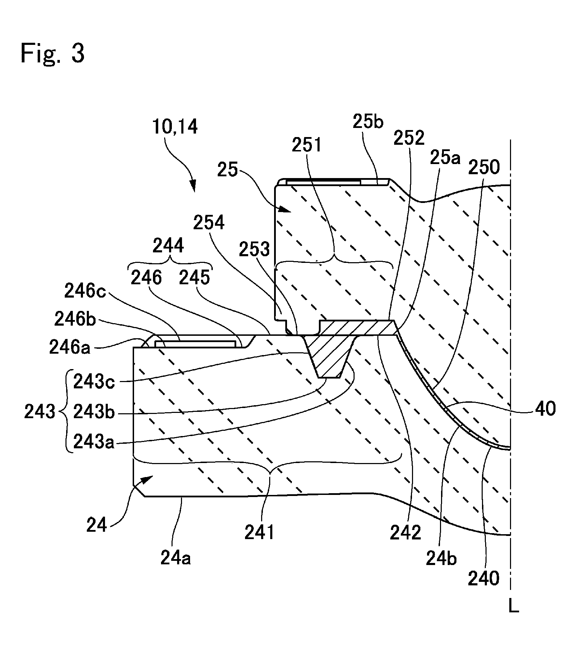

Figs. 2(a), 2(b) and 2(c) are explanatory views showing the cemented lens 10 to which the present invention is applied. Fig. 2(a) is a cross-sectional view showing the cemented lens 10, Fig. 2(b) is a plan view showing the first lens 24 of the cemented lens 10 which is viewed from the second lens 25 side, and Fig. 2(c) is a plan view showing the second lens 25 of the cemented lens 10 which is viewed from the first lens 24 side. Fig. 3 is an enlarged explanatory view showing a part of the cemented lens 10 to which the present invention is applied. In Fig. 2(b), the second lens 25 is shown by the alternate long and short dash line.

As shown in Figs. 2(a) through 3, the fourth group 14 is the cemented lens 10 obtained by cementing the concave surface of the first lens 24 and the convex surface of the second lens 25 together by an adhesive 40. Each of the first lens 24 and the second lens 25 is provided with a substantially circular planar shape. In this embodiment, an outside dimension (diameter) of the first lens 24 is larger than an outside dimension (diameter) of the second lens 25. The first lens 24 and the second lens 25 are respectively provided with flat faces 249 and 259 on their outer peripheral faces and gates are located at the flat faces 249 and 259 at the time of resin molding.

The first lens 24 is provided on the face 24b cemented to the second lens 25 with a lens face 240 formed in a concave shape and a first lens side outer peripheral region 241 surrounding the lens face 240 on an outer peripheral side. The first lens side outer peripheral region 241 is a face which is perpendicular to the optical axis "L". The second lens 25 is provided on the face 25a cemented to the first lens 24 with a lens face 250 in a convex shape and a second lens side outer peripheral region 251 surrounding the lens face 250 on an outer peripheral side. The second lens side outer peripheral region 251 is a face which is perpendicular to the optical axis "L".

In the cemented lens 10 in this embodiment, the first lens side outer peripheral region 241 of the first lens 24 is formed with a recessed part 243 which is extended in a circumferential direction so as to surround the lens face 240. In this embodiment, the recessed part 243 is formed in a ring shape which is connected in a circumferential direction. Further, the recessed part 243 is formed at a position separated from the lens face 240 to an outer side in a radial direction. Therefore, the first lens side outer peripheral region 241 of the first lens 24 is formed with an inner peripheral side region 242 formed in a flat ring shape, the recessed part 243 in a ring shape, and an outer peripheral side region 244 in a ring shape from the lens face 240 side toward an outer side edge.

The outer peripheral side region 244 is provided with a first region 245 located at the same height position as the inner peripheral side region 242 and a second region 246 (outer peripheral side recessed part) which is one-step lower than the first region 245. The second region 246 is provided with an outer peripheral portion 246a which is continuously extended in a circumferential direction at an outer side edge of the first lens side outer peripheral region 241 and enlarged portions 246b which are protruded from the outer peripheral portion toward the inner side at a plurality of positions in the circumferential direction. The enlarged portion 246b is formed with a circular part 246c with which a push-out pin (not shown) for releasing a die is abutted when the first lens 24 is molded. In this embodiment, the second region 246 is shallower than the recessed part 243 and an upper end face of the circular part 246c is located at a lower position than the first region 245.

In the first lens 24 constituted as described above, a cross section of the recessed part 243 is formed in a substantially trapezoid shape and an inner face of the recessed part 243 is provided with a slant face 243a on an inner peripheral side, a bottom part 243b and a slant face 243c on an outer peripheral side. Therefore, a groove width of the recessed part 243 becomes narrow toward the bottom part 243b.

### (Structure of Protruded Part 253)

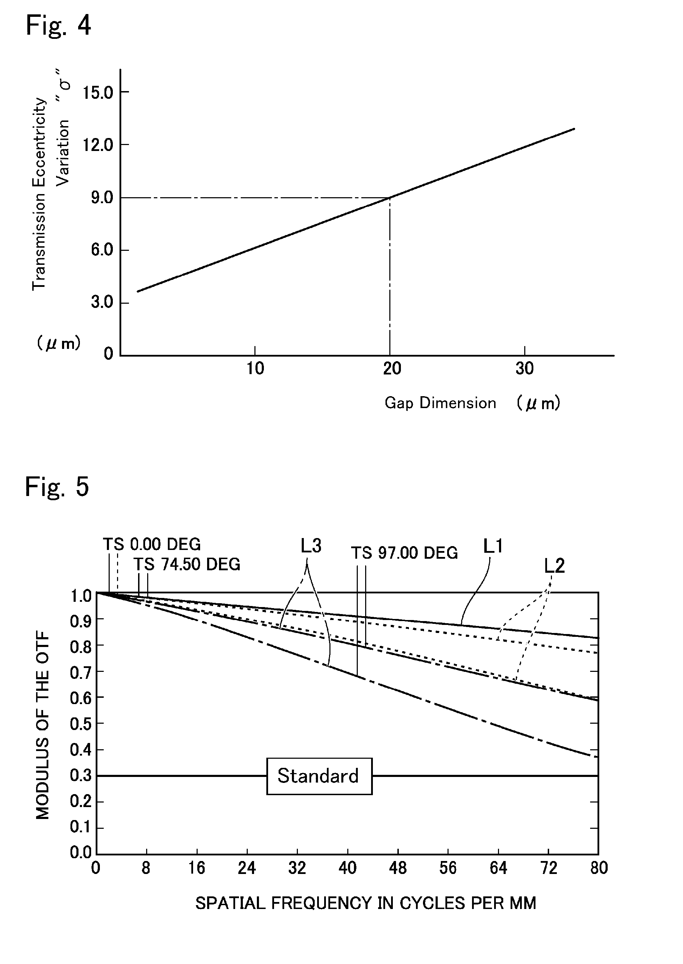

Fig. 4 is a graph showing a relationship between a distance between the lens faces 240 and 250 and a transmission eccentricity variation in the cemented lens 10 to which the present invention is applied.

In the cemented lens 10 in this embodiment, an outer peripheral region on one side of the first lens side outer peripheral region 241 and the second lens side outer peripheral region 251 is formed with a protruded part 253 which is protruded toward an outer peripheral region on the other side and is abutted with the outer peripheral region on the other side. In this embodiment, in the first lens side outer peripheral region 241 and the second lens side outer peripheral region 251, the second lens side outer peripheral region 251 is formed with protruded parts 253 (not shown in Fig. 2(a)) which are protruded toward the first lens side outer peripheral region 241 and are abutted with the first lens side outer peripheral region 241. The protruded part 253 is formed on an outer circumferential edge portion of the second lens side outer peripheral region 251 at a position separated from the lens face 250. Therefore, the second lens side outer peripheral region 251 is provided with a flat inner peripheral region 252 on an inner peripheral side with respect to the protruded part 253 and is provided with a flat outer peripheral region 254 on an outer peripheral side with respect to the protruded part 253. Further, the protruded part 253 is abutted with a portion of the first lens side outer peripheral region 241 on an outer side in a radial direction with respect to the ring-shaped recessed part 243.

More specifically, the protruded part 253 is formed at a position partly overlapping with the recessed part 243. However, the protruded part 253 is not abutted with an inside of the recessed part 243. Therefore, the protruded part 253 is abutted with a portion on an outer side in the radial direction of the first lens side outer peripheral region 241 with respect to the ring-shaped recessed part 243. Further, the protruded part 253 is formed at a plurality of positions separated from each other in the circumferential direction. In this embodiment, the protruded part 253 is formed at three positions with an equal angular interval in the circumferential direction.

The protruded part 253 is abutted with the first lens side outer peripheral region 241 to control a distance between the lens face 240 and the lens face 250. More specifically, a distance between the first lens side outer peripheral region 241 and the second lens side outer peripheral region 251 is larger than a distance between the lens face 240 and the lens face 250. However, a distance between the lens face 240 and the lens face 250 is set from 3µm to 20µm by setting the protruded parts 253 to be abutted with the first lens side outer peripheral region 241. Therefore, thickness of the adhesive 40 in a portion located between the lens face 240 of the first lens 24 and the lens face 250 of the second lens 25 is from 3µm to 20µm. Accordingly, a transmission eccentricity variation in the cemented lens 10 (variation of an eccentric amount between the center of the lens face 240 of the first lens 24 and the center of the lens face 250 of the second lens 25) is small.

More specifically, in a case that a distance between the lens face 240 and the lens face 250 is varied from 3µm to 30µm when the cemented lens 10 is manufactured, a relationship between a distance between the lens faces 240 and 250 and a transmission eccentricity variation (standard deviation "σ") has been examined and the result shown in Fig. 4 is obtained.

As shown in Fig. 4, with a narrower distance between the lens faces 240 and 250, the transmission eccentricity variation becomes smaller and, when the distance between the lens faces 240 and 250 is 20µm or less, the standard deviation "σ" becomes 9µm or less.

On the other hand, in a case that the distance between the lens faces 240 and 250 is less than 3µm, a space and separation may be occurred between the lens faces 240 and 250 and thus, in this embodiment, the distance between the lens faces 240 and 250 is set to be 3µm or more and 20µm or less.

### (Structure of Adhesive 40)

Fig. 5 is a graph showing a relationship between a spatial frequency and an MTF (Modulation Transfer Function) of the cemented lens 10 to which the present invention is applied. In this embodiment, in order to appropriately determine a refractive index "n" of the adhesive 40, a distance "d" between the lens faces 240 and 250 (thickness of the adhesive 40 located between the lens faces 240 and 250) is varied to 3µm, 10µm, 15µm, 20µm and 25µm, and a refractive index "n" of the adhesive 40 is varied between 1.485-1.420 and, in these cases, a relationship between the spatial frequency and the MTF has been investigated. In this evaluation, a refractive index of lens material used for the first lens 24 is 1.5847 and a refractive index of lens material used for the second lens 25 is 1.52996. Among evaluation results of the investigation, Fig. 5 shows data in a case that a distance "d" between the lens faces 240 and 250 is 20µm and a refractive index "n" of the adhesive 40 is 1.485. The solid line "L1" shows data in a case that an image height is 0mm, the dotted line "L2" shows data that an image height is 1.4mm, and the alternate long and short dash line "L3" is data that an image height is 1.8mm. Further, in this evaluation, the allowable condition is set until the OTF coefficient (Optical Transfer Function coefficient) is decreased to 0.3 (30%). Therefore, in a case that the dotted line "L2" (data at the position where the image height is 1.4mm) falls below the standard (0.3 times) when the number of lines is not more than 80 /mm, the cemented lens 10 is out of the standard and, in a case that the alternate long and short dash line "L3" (data at the position where the image height is 1.8mm) falls below the standard (0.3 times) when the number of lines is not more than 71 /mm, the cemented lens 10 is out of the standard.

As the results of this evaluation, when the distance "d" between the lens faces 240 and 250 is varied, an allowable range of the refractive index "n" of an adhesive 40 is as follows.

When the distance "d" = 3µm, the refractive index "n" of the adhesive 40 = 1.485-1.420.

When the distance "d" = 10µm, the refractive index "n" of the adhesive 40 = 1.485-1.470.

When the distance "d" = 15µm, the refractive index "n" of the adhesive 40 = 1.485-1.480.

When the distance "d" = 20µm, the refractive index "n" of the adhesive 40 = 1.485-1.480.

When the distance "d" = 25µm, the refractive index "n" of the adhesive 40 = 1.485.

In other words, when the distance "d" between the lens faces 240 and 250 exceeds 20µm, an allowable range of the refractive index "n" of the adhesive 40 becomes extremely narrow. Therefore, from viewpoints of the transmission eccentricity described with reference to Fig. 4 and the allowable range of the refractive index "n" of the adhesive 40, it is preferable that the distance "d" between the lens faces 240 and 250 is 20µm or less. Further, regarding the refractive index "n" of the adhesive 40, it is preferable that at least one of a difference from a refractive index of lens material structuring the first lens 24 and a difference from a refractive index of lens material structuring the second lens 25 is 0.05 or less.

### (Principal Effects in this Embodiment)

As described above, in the cemented lens 10 in this embodiment, the second lens side outer peripheral region 251 is formed with the protruded part 253 which is protruded toward the first lens side outer peripheral region 241 and is abutted with the first lens side outer peripheral region 241. Therefore, a distance between the lens face 240 of the first lens 24 and the lens face 250 of the second lens 25 can be controlled with a high degree of accuracy. Accordingly, the thickness of the adhesive 40 between the lens face 240 of the first lens 24 and the lens face 250 of the second lens 25 can be made thin and thus the eccentricity between the lenses is hard to be occurred. Further, the thickness of the adhesive 40 between the lens face 240 of the first lens 24 and the lens face 250 of the second lens 25 does not become too thin and thus a gap space and separation between the lenses are hard to be occurred.

Further, in order to cement the first lens 24 and the second lens 25 together, an adhesive 40 is applied to the first lens 24 and then the second lens 25 is put on the first lens 24. In this embodiment, the first lens side outer peripheral region 241 is formed with the recessed part 243 which is extended in a circumferential direction so as to surround the lens face 240 and thus, even when a sufficient adhesive is applied so that a bubble is not formed, an excessive adhesive 40 is retained in the recessed part 243. Therefore, the adhesive 40 does not leak to the outside of the cemented lens 10. Further, the recessed part 243 is formed in a ring shape which is connected in a circumferential direction and thus leakage of the adhesive 40 to the outside of the lens can be prevented over the entire periphery in the circumferential direction. In addition, the first lens side outer peripheral region 241 is formed with the second region 246 (outer peripheral side recessed part) on a further outer side in a radial direction with respect to the recessed part 243 and thus leakage of the adhesive 40 to the outside of the lens can be further prevented by the second region 246. Therefore, when the cemented lens 10 is to be provided in an inside of the lens holder 30, a state is hard to be occurred that the cemented lens 10 is disposed in an inclined state in the inside of the lens holder 30 due to the adhesive 40 which is leaked out to the outside of the lens.

Further, the protruded part 253 is abutted with a portion of the first lens side outer peripheral region 241 on an outer side in a radial direction with respect to the recessed part 243. Therefore, the adhesive 40 is not existed between the protruded part 253 and the first region 245 of the first lens side outer peripheral region 241 and thus a distance between the lens face 240 of the first lens 24 and the lens face 250 of the second lens 25 (thickness of the adhesive 40 between the lens face 240 of the first lens 24 and the lens face 250 of the second lens 25) can be controlled by the protruded part 253 with a high degree of accuracy. Further, the adhesive 40 is spread over the entire inner side with respect to the protruded parts 253 and thus the thickness of the adhesive 40 between the lens face 240 of the first lens 24 and the lens face 250 of the second lens 25 can be controlled with a high degree of accuracy.

Further, the protruded part 253 is protruded from the second lens side outer peripheral region 251 and is abutted with the first lens side outer peripheral region 241. Therefore, the protruded part 253 is not covered with the adhesive 40 after the adhesive 40 is applied to the first lens 24 and thus the adhesive 40 is not existed between the protruded part 253 and the first region 245 of the first lens side outer peripheral region 241. Accordingly, the distance between the lens face 240 of the first lens 24 and the lens face 250 of the second lens 25 (thickness of the adhesive 40 between the lens face 240 of the first lens 24 and the lens face 250 of the second lens 25) can be controlled by the protruded part 253 with a high degree of accuracy.

In addition, the protruded part 253 is formed at a plurality of positions separated from each other in a circumferential direction. Therefore, in comparison with a case that the protruded part 253 is formed over the entire region in the circumferential direction, or that the protruded part 253 is formed at only one position in the circumferential direction, the distance between the lens face 240 of the first lens 24 and the lens face 250 of the second lens 25 (thickness of the adhesive 40 between the lens face 240 of the first lens 24 and the lens face 250 of the second lens 25) can be controlled with a high degree of accuracy. In other words, when the protruded part 253 is formed over the entire region in the circumferential direction, a high accuracy is required over the entire region in the circumferential direction. However, in a case that the protruded part 253 is formed at a plurality of positions separated from each other in a circumferential direction, only portions in the circumferential direction (portions where the protruded parts 253 are formed) are required to be formed with a high degree of accuracy. Further, when the protruded part 253 is formed at one position in the circumferential direction, the first lens 24 and the second lens 25 may be cemented in an inclined state. However, when the protruded part 253 is formed at a plurality of positions separated from each other in the circumferential direction, the inclination is hard to be occurred.

Further, the thickness of the adhesive 40 located between the lens face 240 of the first lens 24 and the lens face 250 of the second lens 25 is set to be 3µm or more and thus a gap space and separation between the lenses are hard to be occurred. Further, the thickness of the adhesive 40 located between the lens face 240 of the first lens 24 and the lens face 250 of the second lens 25 is set to be not more than 20µm and thus eccentricity is hard to be occurred between the first lens 24 and the second lens 25. Further, the thickness of the adhesive 40 located between the lens face 240 of the first lens 24 and the lens face 250 of the second lens 25 is set to be not more than 20µm and thus an allowable range of a refractive index of the adhesive 40 capable of preventing affection on optical characteristics is wide. More specifically, it is sufficient that a difference between a refractive index of the adhesive 40 and a refractive index of lens material structuring the first lens 24 is not more than 0.05, or that a difference between the refractive index of the adhesive 40 and a refractive index of lens material structuring the second lens 25 is not more than 0.05. When such an adhesive 40 is used, a difference between the refractive index of the adhesive 40 and the refractive index of the lens material is hard to affect the optical characteristics.

Further, the lens holder 30 is set in a contact state with only the first lens 24 of the cemented lens 10 and in a non-contact state with the second lens 25. Further, a gap space "G" is provided between an inner peripheral face of the tube-shaped body part 38 and an outer peripheral face 248 of the first lens 24. Therefore, even when expansion and shrinkage are occurred in the lens holder 30 and the cemented lens 10 with variation of the ambient temperature, a large stress is not applied to the cemented faces (adhesive 40) of the cemented lens 10 and thus a problem such as separation is hard to be occurred. Even when expansion and shrinkage are occurred in the lens holder and the lenses with variation of the ambient temperature, a problem such as separation in the cemented lens is hard to be occurred.

### [Other Embodiments]

As an adhesive 40 which is used in the cemented lens 10, it is preferable that an adhesive 40 having elasticity is used. According to this structure, even when a thermal expansion coefficient of lens material of the first lens 24 and a thermal expansion coefficient of lens material of the second lens 25 are different from each other, separation is hard to be occurred when the ambient temperature is varied.

In the cemented lens 10 described above, the protruded part 253 is provided on the second lens 25. However, a structure may be adopted that a protruded part is provided on the first lens side outer peripheral region 241 and the protruded part is abutted with the second lens side outer peripheral region 251.

In the embodiment described above, the lens is constituted of four groups having five lenses but the present invention may be applied to an image pickup lens and a lens unit having a lens constituted of five groups having six lenses or the like.

## Claims

1. A cemented lens, comprising:
a first lens having a concave surface;
a second lens having a convex surface;
an adhesive with which the concave surface of the first lens and the convex surface of the second lens are cemented;
wherein
the first lens and the second lens are plastic lenses;
the first lens is provided with a first lens side outer peripheral region on an outer peripheral side of a face which is cemented with the second lens so as to surround a lens face in a concave shape;
the second lens is provided with a second lens side outer peripheral region on an outer peripheral side of a face which is cemented with the first lens so as to surround a lens face in a convex shape;
an outer peripheral region on one side of the first lens side outer peripheral region and the second lens side outer peripheral region is formed with a protruded part which is protruded toward an outer peripheral region on the other side and is abutted with the outer peripheral region on the other side; and
the first lens side outer peripheral region is formed with a recessed part which is extended in a circumferential direction so as to surround the lens face of the first lens.

2. The cemented lens according to claim 1, wherein
the protruded part is abutted with a portion of the outer peripheral region on the other side on an outer side in a radial direction with respect to the recessed part.

3. The cemented lens according to claim 1 or 2, wherein
the protruded part is protruded from the second lens side outer peripheral region and is abutted with the first lens side outer peripheral region.

4. The cemented lens according to one of claims 1 through 3, wherein
the recessed part is formed in a ring shape connected in a circumferential direction.

5. The cemented lens according to one of claims 1 through 4, wherein
the protruded part is formed at a plurality of positions separated from each other in the circumferential direction.

6. The cemented lens according to one of claims 1 through 5, wherein
thickness of a portion of the adhesive located between the lens face of the first lens and the lens face of the second lens is set from 3µm to 20µm.

7. The cemented lens according to one of claims 1 through 6, wherein
at least one of a difference between a refractive index of the adhesive and a refractive index of lens material structuring the first lens and a difference between the refractive index of the adhesive and a refractive index of lens material structuring the second lens is set to be not more than 0.05.

8. The cemented lens according to one of claims 1 through 7, wherein
the adhesive has elasticity.

9. The cemented lens according to one of claims 1 through 8, wherein
the first lens side outer peripheral region is formed with an outer peripheral side recessed part on an outer side in a radial direction with respect to the recessed part.

10. A lens unit, comprising:
the cemented lens defined in one of claims 1 through 9; and
a lens holder which holds the cemented lens;
wherein the lens holder is set in a contact state with only one lens of the first lens and the second lens and in a non-contact state with the other lens.

11. The lens unit according to claim 10, wherein
the lens holder is contacted with a face of the one lens which is cemented with the other lens or a face on an opposite side of the one lens which is cemented with the other lens, and
a gap space is provided between an inner peripheral face of the lens holder and an outer peripheral face of the one lens.

12. The lens unit according to claim 10 or 11, wherein
an outside dimension of the first lens is larger than an outside dimension of the second lens, and
the lens holder is set in a contact state with only the first lens and is in a non-contact state with the second lens.
